# EUROPÄISCHE PATENTSCHRIFT

(11) **EP 4 037 870 B1**
(45) Veröffentlichungstag und Bekanntmachung des Hinweises auf die Patenterteilung: **11.10.2023**
(21) Anmeldenummer: 20793268.2
(22) Anmeldetag: 30.09.2020
(51) Int. Cl.: B23Q 1/03, B23Q 17/24, B25B 1/24, B25B 11/00

(54) **VORRICHTUNG ZUM ABSTÜTZEN EINES WERKSTÜCKS MIT EINER MEHRZAHL VON PARALLEL AUSGERICHTETEN UND EINZELN LÄNGSBEWEGLICHEN STÜTZSTIFTEN**
APPARATUS FOR SUPPORTING A WORKPIECE WITH A PLURALITY OF SUPPORTING PINS WHICH ARE ORIENTED PARALLEL AND ARE INDIVIDUALLY LONGITUDINALLY MOVABLE
APPAREIL POUR SUPPORTER UNE PIÈCE À TRAVAILLER AVEC UNE PLURALITÉ DE BROCHES DE SUPPORT QUI SONT ORIENTÉES PARALLÈLEMENT ET QUI SONT INDIVIDUELLEMENT MOBILES LONGITUDINALEMENT

(30) Priorität: 30.09.2019 DE 102019126361
(43) Veröffentlichungstag der Anmeldung: 10.08.2022
(73) Patentinhaber: Matrix GmbH Spannsysteme und Produktionsautomatisierung, 73760 Ostfildern-Nellingen (DE)
(72) Erfinder: SCHWENK, Joachim, 78737 Fluorn-Winzeln (DE)
(74) Vertreter: REHBERG HÜPPE + PARTNER
(86) Internationale Anmeldenummer: PCT/EP2020/077379
(87) Internationale Veröffentlichungsnummer: WO 2021/064028

(56) Entgegenhaltungen:
- CN-B- 108 620 910
- DE-A1- 19 611 754
- DE-A1-102007 024 674
- DE-U1-202014 100 965

## Beschreibung

### TECHNISCHES GEBIET DER ERFINDUNG

Die Erfindung bezieht sich auf eine Vorrichtung zum Abstützen eines Werkstücks mit einer Mehrzahl von parallel ausgerichteten und einzeln längsbeweglichen Stützstiften. Das von einer solchen Vorrichtung abgestützte Werkstück kann auf den Stützstiften aufliegen oder von den Stützstiften gegen eine gleichartige oder andersartige Vorrichtung gespannt werden. So kann die Vorrichtung als sogenannter Formspannbacken Verwendung finden. In Verbindung mit einer gleich- oder andersartigen Vorrichtung ist die Vorrichtung auch für Greifanawendungen, d. h. insbesondere zur Ausbildung eines sich an das jeweilige Werkstück anpassenden oder bereits angepassten Greifers geeignet.

Insbesondere bezieht sich die Erfindung auf eine Vorrichtung zum Abstützen eines Werkstücks mit einem Rahmen, mit einem Stützfeld aus Stirnflächen einer Mehrzahl von in ihren Haupterstreckungsrichtungen parallel zueinander in dem Rahmen geführten und jeweils gegen eine Rückstellkraft gegenüber dem Rahmen eindrückbaren Stützstiften und mit einer Erfassungseinrichtung, die eine Lichtschranke aufweist, um Relativlagen von Stützstiften der Mehrzahl gegenüber dem Rahmen zu erfassen.

### STAND DER TECHNIK

Eine Haltevorrichtung für Werkstücke, die aus der DE 198 02 320 A1 bekannt ist, weist eine Festlegeeinrichtung zum Festlegen der Stützstifte gegenüber dem Rahmen auf. An der dem Werkstück abgewandten Rückseite der Stützstifte ist ein offener Druckraum vorgesehen, der mit Druckluft beaufschlagbar ist, die durch Freiräume zwischen den Spannstiften aus dem Druckraum auf das jeweilige Werkstück hin austreten kann. Die Stützstifte können in dem Druckraum einen radialen Absatz aufweisen, so dass das Druckmedium die Stützstifte auf das Werkstück hin beaufschlagt. Um mit einem der Stützstifte eine Relativlage eines Werkstücks gegenüber dem Rahmen zu erfassen, ist hinter einer die Druckkammer begrenzenden Rückhalteplatte, durch die eine Rückhaltestange, welche unter Ausbildung des Radialbunds von hinten in einen Hauptkörper des Stützstifts eingeschraubt ist, hindurchtritt, ein Mikroschalter angeordnet. Der Mikroschalter wird durch einen Radialbund am freien Ende der Rückhaltestange betätigt, wenn der Stützstift um ein gewisses Maß gegenüber dem Rahmen eingedrückt ist. Statt des Mikroschalters kann auch ein Wegaufnehmer vorgesehen sein, der die genaue Relativlage des Stützstifts gegenüber dem Rahmen erfasst.

Aus der DE 43 39 102 A1 ist eine Handhabungsvorrichtung zum mechanischen Greifen, Halten, Bewegen und Handhaben von beliebig geformten Gegenständen bekannt, die die Merkmale des Oberbegriffs des unabhängigen Patentanspruchs 1 aufweist. Die Handhabungsvorrichtung besteht im Wesentlichen aus einer großen Anzahl von auf die zu erfassenden Gegenstände abzusenkenden Haltestiften, die in Bohrungen von Haltestiftführungsplatten längsverschieblich gelagert sind und die die Gegenstände klemmen. Durch Zurückschieben der Haltestifte mit einer Auswerferplatte werden die Gegenstände wieder gelöst. Die Haltestifte können durch querverschiebliche Spannplatten gegenüber den Haltestiftführungsplatten verspannt werden. An den Haltestiftführungsplatten ist eine Lichtschranke angebracht, die ein Signal gibt, sobald Haltestifte durch die Gegenstände relativ zu den Haltestiftführungsplatten längsverschoben werden und mit ihren oberen Enden in den Strahlengang gelangen.

Aus der US 5 608 206 A ist eine Vorrichtung zum flexiblen Greifen von Objekten mit einem Sensor bekannt. Der Sensor weist eine Mehrzahl von Haltestiften zum Kontaktieren und Greifen der Objekte auf. Die Haltestifte sind in einer Lagerplatte längsverschieblich gelagert. Die Haltestifte greifen dabei in ein Sensorarray ein, mit dem eine Relativverschiebung der Haltestifte gegenüber der Lagerplatte optomechanisch kodiert und erfasst wird. Dabei ist am hinteren Ende jedes Haltestifts ein mit Durchbrechungen versehener Hohlzylinder angeordnet, in den mit Hilfe eines Lichtleiters Licht axial eingestrahlt wird. Dem Außenumfang des Hohlzylinders liegen Enden anderer Lichtleiter punktuell gegenüber, so dass in verschiedenen Längspositionen der jeweiligen Haltestange und des mit ihr verbundenen Hohlzylinders Licht aus dem Hohlzylinder in verschiedene Kombinationen der anderen Lichtleiter eintritt.

Eine Beschichtungspresse zur mehrseitigen Folienbeschichtung von Möbelbauplatten mit einem auf einem Tablettwagen mit zu beschichtenden Werkstücken in die Beschichtungspresse einfahrbaren Legetisch ist aus der DE 196 11 754 A1 bekannt. Der Legetisch weist eine Tischplatte mit rasterförmig angeordneten Durchtrittsöffnungen auf, in die bewegliche Träger für die Werkstücke eingesetzt sind. Jeder Träger ist mindestens einfach in der Länge reversibel so verlängerbar, dass die langen Träger innerhalb der Beschichtungspresse auf einer Auflagerfläche einer unteren Pressplatte stehend nach oben aus der Tischplatte hervorstehen, so dass die auf ihnen gelagerten Werkstücke gegenüber der Oberfläche der Tischplatte und den nicht oder nur teilweise überdeckten kurzen Trägern anhebbar sind. In einer Einrichtstation vor der Beschichtungspresse, zu der der mit Werkstücken belegte Legetisch bewegt wird, ist unterhalb des Legetisches ein zur Tischplatte verschieblicher Messwagen angeordnet, der mit nach oben gerichteten Sensoren versehen ist. Diese Sensoren sind durch die Durchtrittsöffnungen des Gitterrostes gerichtet, in die keine Träger eingesetzt sind. Die Sensoren sind als lichtempfindliche Fotozeilen ausgebildet, die auf Lichteinfall einer über der Einrichtstation angeordneten Lichtquelle reagieren. Ein aufliegendes Werkstück behindert diesen Lichteinfall, was von einer angeschlossenen Messvorrichtung registriert wird. Wenn alle einen einzelnen Träger umgebenden Sensoren keinen Lichteinfall registrieren, ist sichergestellt, dass dieser Träger vollständig von einem Werkstück überdeckt wird, so dass er verlängert werden kann. Zeichnet nur ein Sensor von allen einen Träger umgebenden Sensoren einen Lichteinfall auf, so bleibt oder wird der Träger verkürzt.

Aus der DE 20 2014 100 965 U1 ist eine Vorrichtung zur Werkzeugkontrolle mit einem Bearbeitungsbereich für Werkstücke, einem Werkzeugmagazin für Werkzeuge und einem beweglichen Werkzeughalter bekannt, der zwischen dem Werkzeugmagazin und dem Bearbeitungsbereich bewegbar ist. Zwischen dem Bearbeitungsbereich und dem Werkzeugmagazin ist ein Lichtgitter zur Kontrolle des Werkzeuges angeordnet. Zwischen einem ersten Lichtgittergehäuse und einem zweiten Lichtgittergehäuse des Lichtgitters sind Lichtachsen gebildet. Die Lichtachsen sind durch eine Steuer- und Auswerteeinheit einzeln aktivierbar, wobei eine Anzahl und/oder eine Position der Lichtachsen zur zeitoptimierten Auswertung des Werkzeugs einstellbar ist.

### AUFGABE DER ERFINDUNG

Der Erfindung liegt die Aufgabe zugrunde, eine Vorrichtung zum Abstützen eines Werkstücks mit den Merkmalen des Oberbegriffs des unabhängigen Patentanspruchs 1 aufzuzeigen, die zu einer einfachen aber so weitgehenden Überwachung ihrer Funktion ausgebildet ist, dass eine Integration der Vorrichtung in vollautomatisierte Produktionsanlagen möglich ist, die eine vollständig überwachte und dokumentierte Produktion erlauben.

### LÖSUNG

Die Aufgabe der Erfindung wird durch eine Vorrichtung zum Abstützen eines Werkstücks mit den Merkmalen der unabhängigen Patentanspruchs 1 gelöst. Bevorzugte Ausführungsformen der erfindungsgemäßen Vorrichtung sind in den abhängigen Patentansprüchen definiert.

### BESCHREIBUNG DER ERFINDUNG

Bei einer erfindungsgemäßen Vorrichtung zum Abstützen eines Werkstücks mit einem Rahmen und mit einem Stützfeld aus Stirnflächen einer Mehrzahl von in ihren Haupterstreckungsrichtungen parallel zueinander in dem Rahmen geführten und jeweils gegen eine Rückstellkraft gegenüber dem Rahmen eindrückbaren Stützstiften weist eine Erfassungseinrichtung eine Lichtschranke auf, um Relativlagen von Stützstiften der Mehrzahl gegenüber dem Rahmen zu erfassen. Eine Lichtquelle und ein Lichtsensor der Lichtschranke liegen sich über die Haupterstreckungsrichtungen der Stützstifte der Mehrzahl hinweg gegenüber. Die Lichtquelle ist längs einer Seite des Stützfelds in eine Mehrzahl von Teilquellen unterteilt, und/oder der Lichtsensor ist längs einer der Seite gegenüberliegenden anderen Seite des Stützfelds in eine Mehrzahl von Teilsensoren unterteilt.

Bei geeigneter Anordnung der Lichtquelle und des Lichtsensors in und gegenüber den Haupterstreckungsrichtungen ist mit der Lichtschranke feststellbar, ob die Stützstifte der Mehrzahl, bei denen es sich um zumindest einige und vorzugsweise alle Stützstifte der Mehrzahl handelt, gegenüber dem Rahmen eingedrückt sind oder nicht. Dafür geeignet ist insbesondere eine Anordnung der Lichtquelle und des Lichtsensors, bei der sich die nicht eingedrückten Stützstifte der Mehrzahl nicht in dem Lichtweg der Lichtschranke zwischen ihrer Lichtquelle und ihrem Lichtsensor befinden, mit ihrem Eindrücken aber in diesen Lichtweg hinein gelangen und dann von der Lichtquelle kommendes Licht vor dem Lichtsensor ausblenden.

Als vorteilhaft erweist es sich bei der Erfassungseinrichtung der erfindungsgemäßen Vorrichtung, wenn diese eine relative Reduktion einer von dem Lichtsensor der Lichtschranke aktuell registrierten Lichtintensität gegenüber einer maximalen Intensität bei freiem Lichtweg zwischen der Lichtquelle und dem Lichtsensor erfasst. Dies bedeutet, dass nicht nur erfasst wird, ob überhaupt irgendeine oder eine bestimmte Mindestreduktion der Lichtintensität vorliegt. Die relative Reduktion der Lichtintensität weist daraufhin, inwieweit der Lichtweg zwischen der Lichtquelle und dem Lichtsensor blockiert ist und damit wie weit die und/oder wie viele der Stützstifte der Mehrzahl gegenüber dem Rahmen eingedrückt sind.

Ob eine bestimmte relative Reduktion der Lichtintensität auf eine ordnungsgemäße oder eine fehlerhafte Funktion der Vorrichtung hinweist, hängt von der aktuellen Verwendung der Vorrichtung ab. Wenn die Vorrichtung beispielsweise aktuell ein Werkstück abstützt, wobei die Stützstifte teilweise gegenüber dem Rahmen eingedrückt sind, um eine Oberfläche des Werkstücks abzuformen, ist eine bestimmte relative Reduktion der von dem Lichtsensor registrierten Lichtintensität ein Hinweis auf eine ordnungsgemäße Funktion. Wenn hingegen die Stützstifte entlastet sind, so dass sie von den Rückstellkräften gegenüber dem Rahmen zurückgestellt werden sollten, ist jede Reduktion der registrierten Lichtintensität ein Hinweis auf einen Fehler. Es versteht sich, dass eine Reduktion der registrierten Lichtintensität nicht zwingend auf einen eingedrückten Stützstift zurückzuführen ist. Sie kann auch auf den Eintritt von Verunreinigungen in den Bereich der Lichtschranke zurückzuführen sein. Auch dies ist aber als Fehler der erfindungsgemäßen Vorrichtung anzusehen.

Da die Lichtquelle der erfindungsgemäßen Vorrichtung längs einer Seite des Stützfelds in eine Mehrzahl von Teilquellen unterteilt ist und/oder der Lichtsensor der erfindungsgemäßen Lichtquelle längs einer der Seite gegenüberliegenden anderen Seite des Stützfelds in eine Mehrzahl von Teilsensoren unterteilt ist, erlauben die zu dem Licht der einzelnen Teilquellen erfassten Lichtintensitäten bzw. die von den einzelnen Teilsensoren erfassten Teilintensitäten eine räumliche Eingrenzung der gegenüber dem Rahmen eingeschobenen Stützstifte. Im günstigsten Fall ist auflösbar, um welche Stützstifte innerhalb des Stützfelds es sich genau handelt. Konkret kann bei dieser Ausführungsform der erfindungsgemäßen Vorrichtung ein Linienarray von Teilquellen auf der einen Seite und ein Linienarray von Teilsensoren auf der anderen Seite des Stützfelds zum Einsatz kommen, die als Teile preisgünstiger kommerzieller Lichtquellen verfügbar sind.

Es versteht sich, dass noch genauer erfasst werden kann, wo und welche Stützstifte gegenüber dem Rahmen eingedrückt sind, wenn die Lichtquelle längs mehrerer aneinander angrenzender Seiten des Stützfelds in eine Mehrzahl von Teilquellen unterteilt ist und der Lichtsensor längs mehrerer den mehreren Seiten gegenüberliegenden anderen Seiten des Stützfelds in eine Mehrzahl von Teilsensoren unterteilt ist.

Konkret können jeder Reihe und gegebenenfalls auch jeder Spalte von Stützstiften des Stützfelds eine Teilquelle und ein Teilsensor der Lichtquelle zugeordnet sein.

Alternativ oder zusätzlich kann die Lichtquelle auch in den Haupterstreckungsrichtungen der Stützstifte in mehrere Teilquellen unterteilt sein und/oder der Lichtsensor in den Haupterstreckungsrichtungen der Stützstifte in mehrere Teilsensoren unterteilt sein. Dann ist mit der Lichtquelle genauer auflösbar, wie weit die Stützstifte der Mehrzahl gegenüber dem Rahmen eingedrückt sind.

Um mit einer Lichtschranke mit einer mehrere Teilquellen umfassten Lichtquelle maximale Informationen über die Lage der einzelnen Stützstifte gegenüber dem Rahmen zu erlangen, kann die Erfassungseinrichtung die Teilquellen einzeln aktivieren und die zu den einzeln aktivierten Teilquellen von den einzelnen Teilsensoren registrierten Lichtintensitäten getrennt voneinander erfassen. Aus dem Muster der registrierten Lichtintensitäten kann über eine Tabelle von Erfahrungswerten auf ein zugehöriges Eindrückmuster der Stützstifte geschlossen werden oder aber zumindest erkannt werden, ob ein Eindrückmuster der Stützstifte, das aktuell vorliegen sollten, tatsächlich vorliegt oder nicht.

Die erfindungsgemäße Vorrichtung weist eine Festlegeeinrichtung auf, mit der die Stützstifte gegenüber dem Rahmen festlegbar sind. Mit dieser Festlegeeinrichtung kann also ein bestimmtes Eindrückmuster der Stützstifte fixiert werden. Die Erfassungseinrichtung der erfindungsgemäßen Vorrichtung aktiviert die Lichtschranke vorzugsweise zumindest dann, wenn die Festlegeeinrichtung deaktiviert worden ist, um die Stützstifte mittels ihrer Rückstellkräfte zurückzustellen. Die Lichtschranke erfasst dann, ob dieses Rückstellen der Stützstifte tatsächlich erfolgt ist, oder einzelne Stützstifte nicht zurückgestellt wurden, was auf einen Fehler hinweist.

In einer konkreten Ausführungsform der erfindungsgemäßen Vorrichtung können die Stützstifte mit ihren den Stirnflächen abgekehrten Enden in eine Kammer eintauchen, die mit einem Druckmedium beaufschlagbar ist. Dann kann die Erfassungseinrichtung dazu ausgebildet sein, die Lichtschranke speziell dann zu aktivieren, wenn die Kammer mit dem Druckmedium beaufschlagt ist und eine gegebenenfalls vorhandene Festlegeeinrichtung deaktiviert ist. In diesem Betriebszustand sollten mit dem Druckmedium nicht nur die Rückstellkräfte auf die Stützstifte aufgebracht werden, sondern auch etwaige Verunreinigungen zwischen den Stützstiften mit dem Druckmedium aus der Druckkammer und den Freiräumen zwischen den Stützstiften herausgeblasen werden. Entsprechend sollte der Lichtweg der Lichtschranke frei sein. Wenn dennoch eine Reduktion der von dem Lichtsensor registrierten Lichtintensität gegeben ist, wird dadurch ein Fehler erkannt.

Bei der erfindungsgemäßen Vorrichtung ist die Erfassungseinrichtung vorzugsweise so ausgebildet, also beispielsweise ein Controller der Erfassungseinrichtung so programmiert, dass die Erfassungseinrichtung die von dem Lichtsensor der Lichtschranke registrierten Lichtintensitäten selbsttätig auch Fehlerhinweise auswertet und ein Fehlersignal ausgibt, wenn ein Fehlerhinweis vorliegt. Noch mehr bevorzugt ist es, wenn die Erfassungseinrichtung mit dem Fehlersignal eine wahrscheinliche Fehlerursache und /oder Fehlerbeseitigungsmöglichkeit angibt. Damit sind dem Benutzer der Vorrichtung wertvolle Hinweise gegeben. Es versteht sich, dass das Fehlersignal von der Erfassungseinrichtung der erfindungsgemäßen Vorrichtung bei einer automatisierten Produktionsanlage dazu genutzt werden kann, die Produktionsanlage zu stoppen, um eine fehlerbehaftete Produktion zu vermeiden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Stützfeld aus Stirnflächen einer Mehrzahl von Stützstiften die Rede ist, ist dies so zu verstehen, dass genau ein solches Stützfeld, zwei solcher Stützfelder oder mehr solcher Stützfelder vorhanden sind. Die in den Patentansprüchen angeführten Merkmale können durch weitere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Schnittansicht einer erfindungsgemäßen Vorrichtung zum Abstützen eines Werkstücks.
- **Fig. 2**: ist eine Draufsicht auf ein Stützfeld der Vorrichtung gemäß Fig. 1.
- **Fig. 3**: zeigt eine Anordnung von Teilquellen einer Lichtquelle und Teilsensoren eines Lichtsensors einer Lichtschranke der Vorrichtung gemäß Fig. 1 in einer ersten Ausführungsform.
- **Fig. 4**: zeigt eine Anordnung von Teilquellen der Lichtquelle und Teilsensoren des Lichtsensors der Lichtschranke der Vorrichtung gemäß Fig. 1 in einer zweiten Ausführungsform und
- **Fig. 5**: zeigt eine weitere Anordnung von Teilquellen der Lichtquelle und Teilsensoren des Lichtsensors der Lichtschranke einer weiteren erfindungsgemäßen Vorrichtung.

### FIGURENBESCHREIBUNG

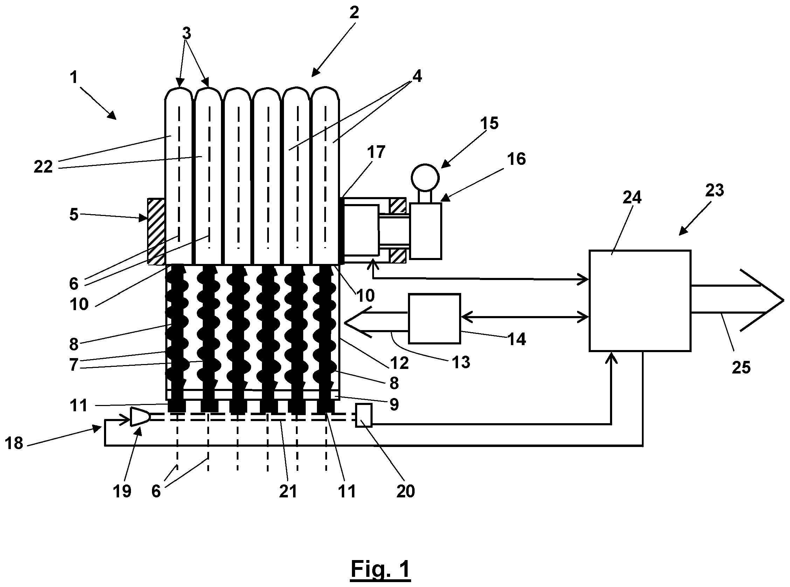

Die in **Fig. 1** dargestellte Vorrichtung 1 dient zum Abstützen eines hier nicht dargestellten Werkstücks. Für das Abstützen des Werkstücks weist die Vorrichtung 1 ein Stützfeld 2 aus Stirnflächen 3 einer Mehrzahl von Stützstiften 4 auf. Die Stützstifte 4 sind über einen Teil ihrer Länge von einem Rahmen 5 umschlossen und in ihren Haupterstreckungsrichtungen 6 parallel zueinander geführt. In den Haupterstreckungsrichtungen 6 sind die Stützstifte 4 gegenüber dem Rahmen 5 gegen Rückstellkräfte eindrückbar. Die Rückstellkräfte werden hier primär von Druckfedern 7 aufgebracht, die auf Rückhaltestangen 8 angeordnet sind. Die Rückhaltestangen 8 sind durch eine Rückhalteplatte 9 hindurch in die rückwärtigen Enden 10 von Hauptköropern 22 der Stützstifte 4 eingeschraubt. Die Druckfedern 7 stützen sich einerseits an den Enden 10 und andererseits an der Rückhalteplatte 9 ab. Köpfe 11 mit erweiterten Durchmesser der Rückhaltestangen 8 schlagen an der Rückseite der Rückhalteplatte 9 an und sichern so die Stützstifte 4 an der Rückhalteplatte 9. Zwischen den Enden 10 der Hauptkörper 22 und der Rückhalteplatte 9 ist eine Kammer 12 gebildet. Die Kammer 12 ist mit Druckluft 13 von einer Druckluftquelle 14 beaufschlagbar, um zusätzliche Rückstellkräfte auf die Stützstifte 4 auszuüben (oder auch um die Druckfedern 7 zu ersetzen) und um Verunreinigungen aus den Freiräumen zwischen den Stützstiften 4, die kreisrunde Querschnitte aufweisen, heraus zu blasen. Mit einer Festlegeeinrichtung 15 sind die Stützstifte 4 gegenüber dem Rahmen 5 festlegbar. Die Festlegeeinrichtung 15 weist hier einen Schraubentrieb 16 auf, der eine seitlich an den Hauptkörpern 22 der Stützstifte 4 des Stützfelds 2 anliegende Druckplatte 17 gegenüber dem Rest des Rahmens 5 verspannt.

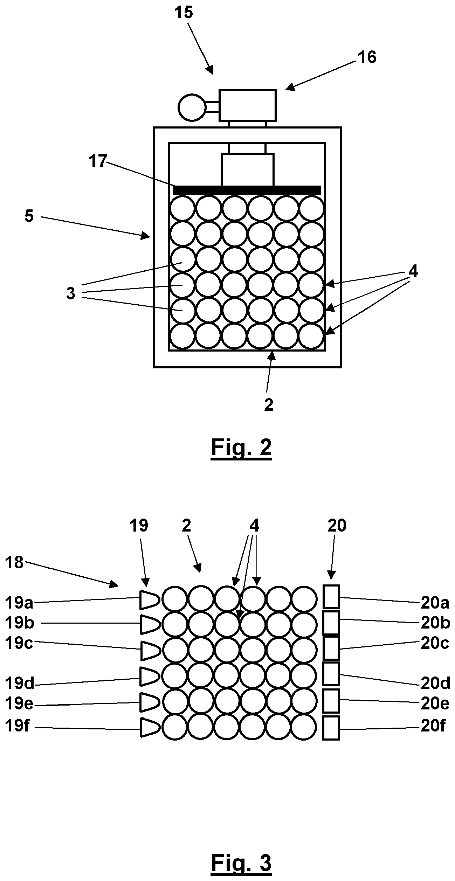

Die Anordnung der Festlegeeirichtung 15 und der Stützstifte 4, die mit ihren Stirnflächen 3 das Stützfeld 2 ausbilden, geht auch aus der Draufsicht gemäß **Fig. 2** hervor. Hier ist gezeigt, dass die Stützstifte 4 bei der vorliegenden Ausführungsform der Vorrichtung 1 hier in einer quadratischen Packung angeordnet sind. Möglich ist aber auch eine hexagonale Packung.

Zur Funktionsüberwachung der Vorrichtung 1 weist diese eine Erfassungseinrichtung 23 mit einer Lichtschranke 18 auf. Die Lichtschranke 18 umfasst eine Lichtquelle 19 und einen Lichtsensor 20, die einander über die Haupterstreckungsrichtungen 6 der Stützstifte 4 hinweg gegenüberliegen. In den Haupterstreckungsrichtungen 6 ist die Lichtschranke 18 dabei so positioniert, dass sich bei vollständig zurückgestellten Stützstiften 4, wie sie in Fig. 1 dargestellt sind, deren Rückhaltestangen 8 nicht in einen Lichtweg 21 zwischen der Lichtquelle 19 und dem Lichtsensor 20 der Lichtschranke 18 ragen. Damit überwacht die Lichtschranke 18, ob die Stützstifte 4 noch nicht eingedrückt oder bereits wieder vollständig zurückgestellt sind. Wenn nur einer der Stützstifte 4 mit seiner Rückhaltestange 8 in den Lichtweg 21 hineinragt, ist die von dem Lichtsensor 20 registrierte Lichtintensität gegenüber einer maximalen Lichtintensität bei freiem Lichtweg 21 reduziert. Wenn eine solche Reduktion der Lichtintensität auftritt, obwohl die Stützstifte 4 zurückgestellt sein sollten, weist dies auf einen Fehler der Vorrichtung 1 hin. Dieser Fehler wird von einem Controller 24 der Erfassungseinrichtung 23 erkannt, was dazu führt, dass der Controller ein Fehlersignal 25 ausgibt. Der Controller 24 erfasst auch, ob die Festlegeeinrichtung 15 und die Druckluftquelle 14 aktiv sind, oder er aktiviert diese gezielt, was jedoch eine aktuatorische Ausbildung der Festlegeeinrichtung 15 erfordert.

**Fig. 3** illustriert eine Aufteilung der Lichtquelle 19 der Lichtschranke 18 in sechs Teilquellen 19a bis 19f und des Lichtsensors 20 in sechs Teilsensoren 20a bis 20f, wobei jeweils ein Teilsensor 20a bis 20f einer der Teilquellen 19a bis 19f über eine Reihe der Stützstifte 14 gegenüber liegt. Durch sequentielles Aktivieren der Teilquellen 19a bis 19f und getrenntes Registrieren von Lichtintensitäten mit den Teilsensoren 20a bis 20f kann ein mit seiner Stützstange 8 in den Lichtweg 21 der Lichtschranke 18 eintretender Stützstift 4 lokalisiert bzw. eine Anzahl von in den Lichtweg 21 eintretenden Stützstiften 4 der Größe nach abgeschätzt und lokalisiert werden.

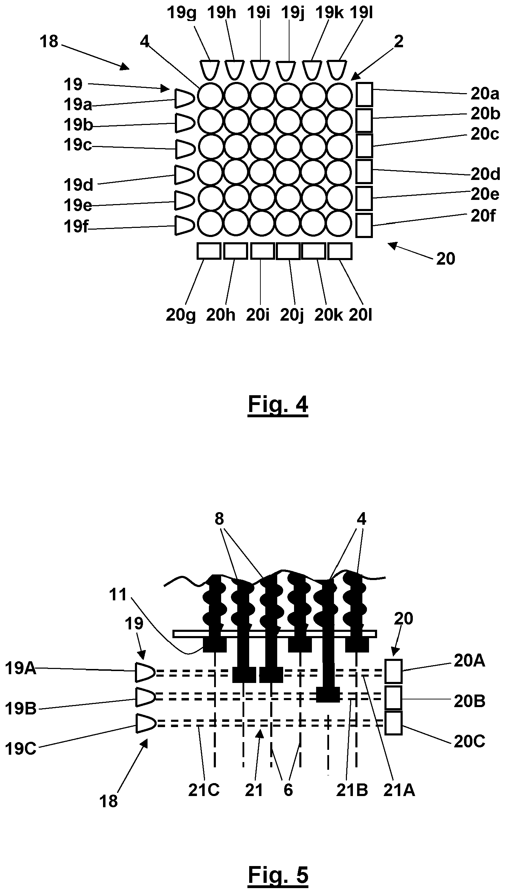

Diese Abschätzung ist noch besser möglich bei der Lichtschranke 18, wie sie in **Fig. 4** skizziert ist, und bei der die Lichtquelle 19 in insgesamt 12 Teilquellen 19a bis 19l und der Lichtsensor 20 in insgesamt 12 Teilsensoren 20a bis 20l aufgeteilt ist, wobei sich jeweils eine Teilquelle 19a bis 19l und ein Teilsensor 20a bis 20g über jede Reihe und jede Spalte der Stützstifte 4 des Stützfelds 2 gegenüberliegen.

**Fig. 5** skizziert demgegenüber, wie es eine Unterteilung der Lichtquelle 19 in drei Teilquellen 19A bis 19C und des Lichtsensors 20 in drei Teilsensoren 20A bis 20C in den Haupterstreckungsrichtungen 6 der Stützstifte 4 ermöglicht, besser zu erfassen, wie tief die Stützstifte 4 eingedrückt sind, weil sie abhängig davon in verschiedene Teilwege 21A bis 21C des Lichtwegs 21 der Lichtschranke 18 eintreten.

### BEZUGSZEICHENLISTE

- 1: Vorrichtung
- 2: Stützfeld
- 3: Stirnfläche
- 4: Stützstift
- 5: Rahmen
- 6: Längsweg
- 7: Druckfeder
- 8: Rückhaltestange
- 9: Rückhalteplatte
- 10: Ende
- 11: Kopf
- 12: Kammer
- 13: Druckluft
- 14: Druckluftquelle
- 15: Festlegeeinrichtung
- 16: Schraubentrieb
- 17: Druckplatte
- 18: Lichtschranke
- 19: Lichtquelle
- 19a bis 19l: Teilquelle
- 19A bis 19C: Teilquelle
- 20: Lichtsensor
- 20a bis 20l: Teilsensor
- 20A bis 20C: Teilsensor
- 21: Lichtweg
- 21A bis 21C: Teillichtweg
- 22: Hauptkörper
- 23: Erfassungseinrichtung
- 24: Controller
- 25: Fehlersignal

## Patentansprüche

1. Vorrichtung (1) zum Abstützen eines Werkstücks mit
- einem Rahmen (5),
- einem Stützfeld (2) aus Stirnflächen (3) einer Mehrzahl von in ihren Haupterstreckungsrichtungen (6) parallel zueinander in dem Rahmen (5) geführten und jeweils gegen eine Rückstellkraft gegenüber dem Rahmen (5) eindrückbaren Stützstiften (4),
- einer Festlegeeinrichtung (15), mit der die Stützstifte (4) gegenüber dem Rahmen (5) festlegbar sind, und
- einer Erfassungseinrichtung (23), die eine Lichtschranke (18) aufweist, um Relativlagen von Stützstiften (4) der Mehrzahl gegenüber dem Rahmen (5) zu erfassen,
- wobei sich eine Lichtquelle (19) und ein Lichtsensor der Lichtschranke (18) über die Haupterstreckungsrichtungen (6) der Stützstifte (4) der Mehrzahl hinweg gegenüber liegen und
- wobei die Lichtquelle (19) längs einer Seite des Stützfelds (2) in eine Mehrzahl von Teilquellen (19a-19l) unterteilt ist und/oder
- wobei der Lichtsensor (20) längs einer der Seite gegenüberliegenden anderen Seite des Stützfelds (2) in eine Mehrzahl von Teilsensoren (20a-20l) unterteilt ist.

2. Vorrichtung (1) nach Anspruch 1, **dadurch gekennzeichnet, dass** die Lichtquelle (19) längs mehrerer aneinander angrenzender Seiten des Stützfelds (2) in eine Mehrzahl von Teilquellen (19a-19l; 19A-10C) unterteilt ist und der Lichtsensor (20) längs mehrerer den mehreren Seiten gegenüberliegenden anderen Seiten des Stützfelds (2) in eine Mehrzahl von Teilsensoren (20a-20l; 20A-20C) unterteilt ist.

3. Vorrichtung (1) nach Anspruch 1 oder 2, **dadurch gekennzeichnet, dass** jeder Reihe und oder Zeile von Stützstiften (4) eine Teilquelle (19a-19l) und ein Teilsensor (20a-20l) zugeordnet sind.

4. Vorrichtung (1) nach einem der vorhergehenden Ansprüche, **dadurch gekennzeichnet,**
- **dass** die Lichtquelle (19) in den Haupterstreckungsrichtungen (6) in mehrere Teilquellen (19A-10C) unterteilt ist und/oder
- **dass** der Lichtsensor (20) in den Haupterstreckungsrichtungen (6) in mehrere Teilsensoren (20A-20C) unterteilt ist.

5. Vorrichtung (1) nach einem der vorhergehenden Ansprüche, **dadurch gekennzeichnet, dass** die Erfassungseinrichtung (23) dazu ausgebildet ist, die Teilquellen (19a-19l; 19A-10C) einzelnen zu aktivieren und dazu die von den einzelnen Teilsensoren (20a-20l; 20A-20C) registrierten Lichtintensitäten voneinander getrennt zu erfassen.

6. Vorrichtung (1) nach einem der vorhergehenden Ansprüche, **dadurch gekennzeichnet, dass** die Erfassungseinrichtung (23) dazu ausgebildet ist, eine relative Reduktion einer von dem jeweiligen einzelnen Teilsensor (20a-20l; 20A-20C) des Lichtsensors (20) der Lichtschranke (18) aktuell registrierten Lichtintensität gegenüber einer maximalen Lichtintensität bei freiem Lichtweg (21) zwischen der Lichtquelle (19) und dem Lichtsensor (20) zu erfassen.

7. Vorrichtung (1) nach einem der vorhergehenden Ansprüche, **dadurch gekennzeichnet, dass** die Erfassungseinrichtung (23) dazu ausgebildet ist, die Lichtschranke (18) zu aktivieren, wenn die Festlegeeinrichtung (15) deaktiviert ist.

8. Vorrichtung (1) nach einem der vorhergehenden Ansprüche, **dadurch gekennzeichnet, dass** die Stützstifte (4) mit ihren den Stirnflächen (3) abgekehrten Enden in eine Kammer (12) eintauchen, die mit einem Druckmedium beaufschlagbar ist.

9. Vorrichtung (1) nach Anspruch 8, **dadurch gekennzeichnet, dass** die Erfassungseinrichtung (23) dazu ausgebildet ist, die Lichtschranke (18) zu aktivieren, wenn die Kammer (12) mit dem Druckmedium beaufschlagt ist.

10. Vorrichtung (1) nach einem der vorhergehenden Ansprüche, **dadurch gekennzeichnet, dass** die Erfassungseinrichtung (23) dazu ausgebildet ist, von dem Lichtsensor (20) der Lichtschranke (18) registrierte Lichtintensitäten auf Fehlerhinweise auszuwerten und ein Fehlersignal (25) auszugeben, wenn ein Fehlerhinweis vorliegt.

11. Vorrichtung (1) nach Anspruch 10, **dadurch gekennzeichnet, dass** die Erfassungseinrichtung (23) dazu ausgebildet ist, mit dem Fehlersignal (25) eine wahrscheinliche Fehlerursache und/oder Fehlerbeseitigungsmöglichkeit anzugeben.

## Claims

1. Apparatus (1) for supporting a workpiece comprising
- a frame (5),
- a supporting field (2) made of end faces (3) of a plurality of supporting pins (4) which are guided parallel to one another in their main extension directions (6) in the frame (5) and which can each be pushed-in against a restoring force with respect to the frame (5),
- a fixing device (15) by which the supporting pins (4) can be fixed with respect to the frame (5), and
- a detection device (23) having a light barrier (18) in order to detect relative positions of supporting pins (4) of the plurality with respect to the frame (5),
- wherein a light source (19) and a light sensor of the light barrier (18) are facing each other across the main extension directions (6) of the supporting pins (4) of the plurality, and
- wherein the light source (19), along one side of the supporting field (2) is divided into a plurality of sub-sources (19a-19l) and/or
- wherein the light sensor (20) along another side of the supporting field (2) facing the one side is divided into a plurality of sub-sensors (20a-20t).

2. Apparatus (1) of claim 1, **characterized in that** the light source (19) along multiple adjoining sides of the supporting field (2) is divided into a plurality of sub-sources (19a-19l; 19A-19C) and the light sensor (20) along multiple other sides of the supporting field (2) facing the multiple sides is divided into a plurality of sub-sensors (20a-20t; 20A-20C).

3. Apparatus (1) of claim 1 or 2, **characterized in that** one sub-source (19a-19l) and one sub-sensor (20a-20l) are assigned to each row and/or line of supporting pins (4).

4. Apparatus (1) of any of the preceding claims, **characterized in**
- **that** the light source (19) in the main extension directions (6) is divided into a plurality of sub-sources (19A-19C) and/or
- **that** the light sensor (20) in the main extension direction (6) is divided into multiple sub-sensors (20A-20C).

5. Apparatus (1) of any of the preceding claims, **characterized in that** the detection device (23) is configured to individually activate the sub-sources (19a-19l; 19A-19C) and to separately detect the corresponding light intensities registered by the individual sub-sensors (20a-20l; 20A-20C).

6. Apparatus (1) of any of the preceding claims, **characterized in that** the detection device (23) is configured to detect a relative reduction of a light intensity presently registered by the respective individual sub-senor (20a-20l; 20A-20C) of the light sensor (20) of the light barrier (18) as compared to a maximum light intensity with free light path (21) between the light source (19) and the light sensor (20).

7. Apparatus (1) of any of the preceding claims, **characterized in that** the detection device (23) is configured to activate the light barrier (18) when the fixing device (15) is deactivated.

8. Apparatus (1) of any of the preceding claims, **characterized in that** the supporting pins (4) with their ends facing away from the end faces (3) immerge into a chamber (12) which can be pressurized with a pressure medium.

9. Apparatus (1) of claim 8, **characterized in that** the detection device (23) is configured to activate the light barrier (18) when the chamber (12) is pressurized with the pressure medium.

10. Apparatus (1) of any of the preceding claims, **characterized in that** the detection device (23) is configured to evaluate the light intensities registered by the light sensor (20) of the light barrier (13) with respect to failure indications and to put out an failure signal (25) when an failure indication is present.

11. Apparatus (1) of claim 10, **characterized in that** the detection device (23) is configured to indicate a probable failure source and/or failure removal option by means of the failure signal (25).

## Revendications

1. Dispositif (1) pour le soutien d'une pièce avec
- un châssis (5),
- un champ de soutien (2) constitué de faces frontales (3) d'une pluralité de tiges de soutien (4) guidées parallèlement entre elles dans le châssis (5) dans leurs directions d'extension principales (6) et pouvant chacune être comprimées contre une force de rappel par rapport au châssis (5),
- un dispositif d'immobilisation (15), avec lequel les tiges de soutien (4) peuvent être immobilisées par rapport au châssis (5), et
- un dispositif de détection (23) qui comprend une barrière photoélectrique (18) afin de détecter des positions relatives des tiges de soutien (4) de la pluralité par rapport au châssis (5),
- dans lequel se trouvent une source de lumière (19) et un capteur de lumière de la barrière photoélectrique (18) sur les directions d'extension principales (6) des tiges de soutien (4) de la pluralité et
- dans lequel la source de lumière (19) est divisée, le long d'une face du champ de soutien (2), en une pluralité de sources partielles (19a - 19l) et/ou
- dans lequel le capteur de lumière (20) est divisé, le long d'une autre face, opposée à cette face, du champ de soutien (2), en une pluralité de capteurs partiels (20a - 20l).

2. Dispositif (1) selon la revendication 1, **caractérisé en ce que** la source de lumière (19) est divisée, le long de plusieurs faces adjacentes entre elles du champ de soutien (2), en une pluralité de sources partielles (19a - 19l ; 19A - 10C) et le capteur de lumière (20) est divisé, le long de plusieurs autres faces, opposées aux plusieurs faces, du champ de soutien (2), en une pluralité de capteurs partiels (20a - 20l ; 20A - 20C).

3. Dispositif (1) selon la revendication 1 ou 2, **caractérisé en ce que**, à chaque rangée et ligne de tiges de soutien (4) correspondent une source partielle (19a - 19l) et un capteur partiel (20a - 20l).

4. Dispositif (1) selon l'une des revendications précédentes, **caractérisé en ce que**
- la source de lumière (19) est divisée, dans les directions d'extension principales (6), en plusieurs sources partielles (19A - 10C) et/ou
- le capteur de lumière (20) est divisé, dans les directions d'extension principales (6), en plusieurs capteurs partiels (20A-20C).

5. Dispositif (1) selon l'une des revendications précédentes, **caractérisé en ce que** le dispositif de détection (23) est conçu pour activer les sources partielles (19a - 19l ; 19A - 10C) individuellement et pour relever séparément entre elles les intensités lumineuses enregistrées par les différents capteurs partiels (20a - 20l ; 20A - 20C).

6. Dispositif (1) selon l'une des revendications précédentes, **caractérisé en ce que** le dispositif de détection (23) est conçu pour détecter une réduction relative d'une intensité lumineuse enregistrée actuellement par le capteur partiel (20a - 20l ; 20A - 20C) individuel respectif du capteur de lumière (20) de la barrière photoélectrique (18) par rapport à une intensité lumineuse maximale dans le cas d'un trajet de lumière libre (21) entre la source de lumière (19) et le capteur de lumière (20).

7. Dispositif (1) selon l'une des revendications précédentes, **caractérisé en ce que** le dispositif de détection (23) est conçu pour activer la barrière photoélectrique (18) lorsque le dispositif d'immobilisation (15) est désactivé.

8. Dispositif (1) selon l'une des revendications précédentes, **caractérisé en ce que** les tiges de soutien (4) plongent, avec leurs extrémités opposées aux faces frontales (3), dans une chambre (12) qui peut être alimentée avec un milieu sous pression.

9. Dispositif (1) selon la revendication 8, **caractérisé en ce que** le dispositif de détection (23) est conçu pour activer la barrière photoélectrique (18) lorsque la chambre (12) est alimentée en milieu sous pression.

10. Dispositif (1) selon l'une des revendications précédentes, **caractérisé en ce que** le dispositif de détection (23) est conçu pour analyser les intensités lumineuses enregistrées par le capteur de lumière (20) de la barrière photoélectrique (18) afin de détecter des indices d'erreur et pour émettre un signal d'erreur (25) lorsqu'un indice d'erreur existe.

11. Dispositif (1) selon la revendication 10, **caractérisé en ce que** le dispositif de détection (23) est conçu pour indiquer, avec le signal d'erreur (25), une cause d'erreur probable et/ou une possibilité d'élimination de l'erreur.
